# EUROPEAN PATENT SPECIFICATION

(11) **EP 2 877 496 B1**
(45) Date of publication and mention of the grant of the patent: **01.03.2017**
(21) Application number: 13747882.2
(22) Date of filing: 26.07.2013
(51) Int. Cl.: C08B 37/14, D21C 5/00, D21H 11/12, C11D 3/22, B05D 7/00, C09D 133/06, C09D 157/00, C08B 15/00, C08L 1/02, D21C 9/00, C09D 5/02, C09D 7/12, C09D 201/00, C09D 167/06

(54) **ANTI-CRACKING AGENT FOR WATER-BORNE ACRYLIC PAINT AND COATING COMPOSITIONS**
PFLANZLICHE ZELLULOSEZUSAMMENSETZUNGEN ZUR VERWENDUNG ALS BOHRSCHLAMM
COMPOSITIONS DE CELLULOSE DÉRIVÉE DE PLANTES À UTILISER EN TANT QUE BOUES DE FORAGE

(30) Priority: 27.07.2012 EP 12178190; 15.03.2013 EP 13159522
(43) Date of publication of application: 03.06.2015
(73) Proprietor: Koninklijke Coöperatie Cosun U.A., 4814 NE Breda (NL)
(72) Inventor: VAN ENGELEN, Gerardus Petrus Franciscus Maria, NL-4854 NK Bavel (NL); VAN INGEN, Gijsbert Adriaan, NL-4814 AP Breda (NL); MEEUWISSEN, Corne, NL-4835 LE Breda (NL)
(74) Representative: Nederlandsch Octrooibureau
(86) International application number: PCT/NL2013/050559
(87) International publication number: WO 2014/017912

(56) References cited:
- WO-A1-2010/105847
- US-A- 4 831 127
- US-A- 5 276 075
- US-A- 5 964 983
- US-A1- 2012 142 909
- DATABASE WPI Week 200870 Thomson Scientific, London, GB; AN 2008-L92752 XP002714271, -& JP 2008 179666 A (MITSUBISHI PAPER MILLS LTD) 7 August 2008 (2008-08-07)

## Description

### Field of the invention

This invention relates to water-borne acrylic paint or coating compositions. More in particular, the invention relates to the use of agents in water-borne acrylic paint or coating compositions as anti-cracking agents. The invention also provides a method for producing water-borne acrylic paint or coating compositions. Further, the invention relates to the use of the anti-cracking agent in water-borne acrylic paint or coating compositions.

### Background of the invention

Manufacturers of paints and coatings are driven by regulatory directives and consumer preferences to deliver products with reduced volatile organic compounds (VOCs). This must be accomplished while maintaining optimum paint and coating performance such as in scrub resistance, block resistance, low temperature film formation, cracking, et cetera. In many cases, some performance compromise must be accepted to meet existing and future VOC regulations.

In order to keep the proportion of VOCs as low as possible manufacturers of paints and coatings have turned to compositions in which organic solvents have been replaced by water. Hence, aqueous dispersions and emulsions of water-insoluble polymers for use as paints, sealants, adhesives or other coatings are nowadays well-known and widely-used.

Film formation of the binder particles into a solid layer of paint or a smooth coating requires the binder particles to coalesce during drying. For a given aqueous dispersion or emulsion of water-insoluble polymers, the lowest temperature at which coalescence occurs sufficiently to form a continuous cohesive film is called its minimum film formation temperature (MFFT or MFT). Complete coalescence is a slow process, particularly at low processing temperatures. The rate of coalescence depends, among other things, on the glass transition temperature (T_{g}) of the polymer constituting the binder particles, on the amount of pigments and fillers, and on the difference between the processing temperature and the glass transition temperature (T-T_{g}).

To allow for improved coalescence of paints and coatings during film formation and drying, it is common practice to add coalescent aids, also known as coalescing solvents or simply coalescents, to aqueous dispersions or emulsions of water-insoluble polymers.

Coalescents temporarily plasticize the polymer particles and facilitate the formation of a continuous film with optimum film properties once the water has evaporated. In addition to increasing the ease of film formation, the coalescent aid also promotes subsequent improvements in film properties. Without the use of coalescents or with too low amounts of coalescents, the films may for example crack and fail to adhere to the substrate surface when dry or even during drying. This problem is particularly pronounced when the paint or coating is applied at relatively low-temperatures.

Coalescents, in addition to low-molecular weight glycols added as humectants, form the most significant contribution to the VOCs content of present water-borne paint and coating compositions. Hence, from the point of view of current and future regulatory compliance, the level of coalescents has to be kept as low as possible.

There are several possible methods of achieving this goal, including employing coalescents which are not classified as VOC, by employing more efficient VOC-classified coalescents at levels within the allowable volatile organic limits of the regulatory directives, or by partly replacing coalescents with other components having good film formation properties. These routes have been extensively studied in the prior art.

US 8,153,707 B2 describes water-borne film-forming compositions containing a continuous aqueous phase and a polymeric film-forming phase. The compositions may be formulated to function as paint, sealant, caulk, adhesive or other coating. The film-forming polymer can be dissolved, dispersed or emulsified in water. Suitable water-insoluble and water-based polymers encompass polymerization products of acrylates, methacrylates and copolymerization products with other monomers. The water-borne film-forming compositions further comprise a non-VOC coalescent aid which comprises fatty acid esters of ethylene glycol and/or propylene glycol. It is said that, when the film-forming compositions are used to prepare paints and adhesives, at least part of the fatty ester coalescence aid is to be substituted with a conventional coalescent aid. Acrylic compositions having between 2.5% and 10% of the coalescent aid showed better or comparable film-forming properties with respect to known coalescents. It was shown that substitution of 20-25 % of a glycol ether coalescent by propylene glycol monolaurate decreased the VOCs content of a water-borne styrene-acrylic paint by 15% while maintaining comparable film-formation properties, among which is mud-cracking.

US 7,705,084 B2 describes a film-forming composition comprising a particulate polymer or emulsified liquid pre-polymer, water and a coalescent aid comprising an ester having the formula RCOOX wherein R and X are independently hydrocarbyl or substituted hydrocarbyl, and at least one of R and X contain at least two unsaturated carbon-carbon bonds. This coalescent is said to aid in lowering the minimum film formation temperature of low glass transition temperature coatings and high glass transition temperature coatings and would allow film formation at ambient temperatures. The coalescent aid of this coating composition is not volatile but rather remains part of the dry film. This coating composition is said to exhibit properties of adhesion and gloss superior to that of coating compositions containing conventional coalescent aids.

It is an object of the present invention to enable the reduction of VOC-classified coalescents in water-borne acrylic paint and coating compositions without detracting from film-formation properties and mechanical properties of dried paints and coatings. More in particular, it is and object of the invention to reduce VOCs and at the same time increase hardness and lower the tendency of mud-cracking of dried acrylic paints and coatings.

### Summary of the invention

Surprisingly, the inventors have found that a parenchymal cellulose composition comprising a particulate cellulose material containing, by dry weight, at least 70% cellulose, 0.5-10% pectin and at least 1-15 % hemicellulose, wherein the particulate material has a volume-weighted median major particle dimension within the range of 25-75 µm can be used to improve film-formation properties of water-borne acrylic coating compositions even at reduced levels of coalescent. Moreover, they found that said parenchymal cellulose composition improves mechanical properties of dry coatings, such as hardness and mud-cracking.

Without wishing to be bound by any particular theory, it is assumed that the organization of the cellulose fibrils, as it exists in the parenchymal cell walls, is at least partly retained in the cellulose based particles of the invention, even though part of the pectin and hemicellulose is removed there from. Hence, contrary to the above-described prior art wherein cellulose-derived material is used in paints or coating compositions, the cellulose nanofibrils according to the present invention are not completely unraveled, i.e. the material is not primarily based on completely unraveled nanofibrils, but instead can be considered to comprise, as the main constituent, parenchymal cell wall debris, having substantial parts of the pectin and hemicellulose removed. The inventors hypothesize that at least some hemicellulose is to be retained in the material to support the structural organization of the cellulose in the particles, e.g. by providing an additional network. Such hemicellulose networks would hold the cellulose fibers together, thereby providing structural integrity and strength to the cellulose particle.

The present inventors have established, as will be illustrated in the appending examples, that the particulate cellulose material of this invention can be used to reduce the amount of VOC's in water-borne acrylic paint and coating compositions, resulting in a remarkable decrease in cracking and associated problems.

A further particular advantage of the present invention is that it uses a biological material that is presently considered a side stream in various industries, such as, in particular, sugar refining. Converting the side product into a new natural resource is obviously considered an advantage at present times, with growing concerns about overuse and wasting of natural resources.

Parenchymal cellulose compositions and their use in paints and coatings in general have been suggested in the art before.

For examples, US 4,831,127 describes a process for obtaining cellulose materials from parenchymal cell-containing plant material, in particular from sugar beet or citrus pulp. It is said that this parencymal cell cellulose demonstrates highly beneficial rheological behaviour and as such may be employed in a wide variety of application, amongst which paints and coatings. The incorporation of this material in water-borne acrylic paints or coatings is not described or suggested, let alone its capability to replace VOC's or any beneficial effect of the material on cracking.

US 5,964,983 describes a process for the production of micro fibrillated cellulose from parenchymal cell-containing plant material, in particular sugar beet pulp obtained after saccharose extraction. The process comprises a homogenization step that unravels the microfibrils without breaking them. The microfibrils have a cross-section between about 2 nm and 4 nm and a length of about 7-25 µm, as determined by electron microscopy. The use of this material as a thickening agent in the aqueous phase of paints, to replace hydroxypropyl cellulose is suggested. The material according to the present invention is not primarily based on completely unraveled nanofibrils.

Remarkably, the present inventors have established that the cellulose material of the present invention, at the concentrations at which it can be employed to beneficially replace VOC's in water-borne acrylate paints and coatings, does not have a significant impact on the rheological properties and/or viscosity of the compositions, which may be seen as a, rather unexpected, benefit.

The present invention provides the new particulate parenchymal cellulose based material as well as its production and use in water-borne acrylic coating compositions, as defined in the appending claims.

### Brief description of the figures

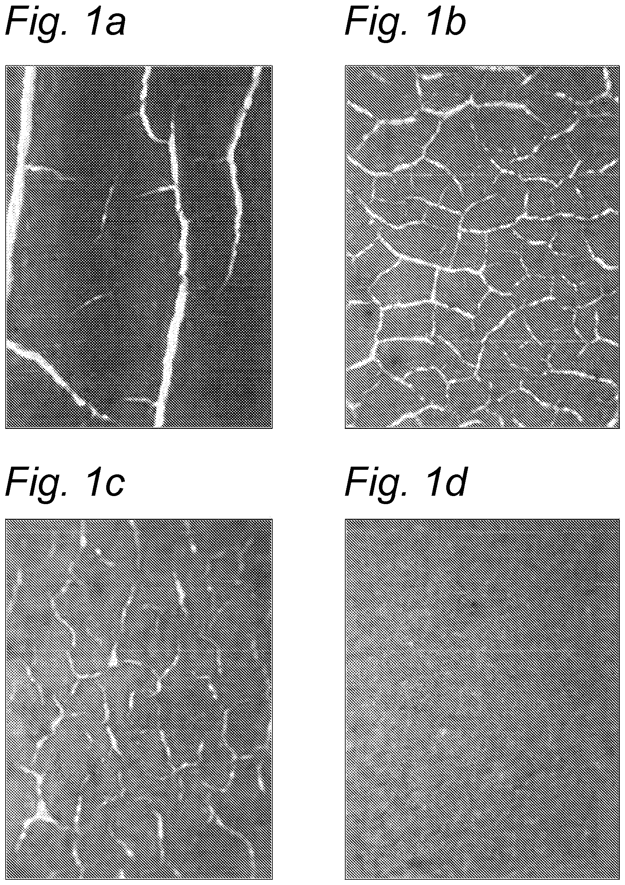

Figure 1a depicts a cured layer of water-borne acrylic coating composition comprising 3 wt.% of coalescent propylene glycol, without particulate parenchymal cellulose material.
Figure 1b depicts a cured layer of water-borne acrylic coating composition comprising 16 wt.% of coalescent propylene glycol, without particulate parenchymal cellulose material.
Figure 1c depicts a cured layer of water-borne acrylic coating composition comprising 3 wt.% of coalescent propylene glycol and particulate parenchymal cellulose material according to the invention.

Figure 1d depicts a cured layer of water-borne acrylic coating composition comprising 16 wt.% of coalescent propylene glycol and particulate parenchymal cellulose material according to the invention.

### Detailed description of the invention

Hence, an aspect of the invention concerns a water-borne acrylic paint or coating composition as defined in the claims.

In accordance with the invention, the parenchymal cellulose composition comprises a particulate cellulose material containing, by dry weight of said particulate cellulose material, at least 70% cellulose, 0.5-10% pectin and at least 1-15 % hemicellulose, wherein the particulate material has a volume-weighted median major particle dimension within the range of 25-75 µm, preferably within the range of 35-65 µm, as measured by laser light diffractometry.

The term "cellulose" as used herein refers to homogeneous long chain polysaccharides comprised of β-D-glucose monomer units, of formula (C₆H₁₀O₅)ₙ, and derivatives thereof, usually found in plant cell walls in combination with lignin and any hemicellulose. The parenchymal cellulose of this invention may be obtained from a variety of plant sources containing parenchymal cell walls. Parenchymal cell wall, which may also be denoted as 'primary cell wall', refers to the soft or succulent tissue, which is the most abundant cell wall type in edible plants. Preferably the particulate cellulose material comprises, by dry weight, at least 70 wt%, preferably at least 80 wt%, more preferably at least 90 wt% of cellulose.

The invention may be generally described as providing novel and improved applications for fiber products derived from citrus fruit pulp or from sugar beet, tomatoes, chicory, potatoes, pineapple, apple, cranberries, grapes, carrots and the like (exclusive of the stems, and leaves). For instance, in sugar beets, the parenchymal cells are the most abundant tissue surrounding the secondary vascular tissues. Parenchymal cell walls contain relatively thin cell walls (compared to secondary cell walls) which are tied together by pectin. Secondary cell walls, are much thicker than parenchymal cells and are linked together with lignin. This terminology is well understood in the art. The parenchymal cellulose in accordance with the invention is preferably obtained from sugar beet, potato, carrot and citrus. In a particularly preferred embodiment of the invention, the parenchymal cellulose is obtained from sugar beet, e.g. as a by-product of sucrose production.

The particulate cellulose material used in accordance with this invention contains particles of specific structure, shape and size, as explained herein before. Typically the material contains particles having the form of platelets comprising parenchymal cellulose structures or networks. It is preferred that the size distribution of the particulate material falls within certain limits. When the distribution is measured with a laser light scattering particle size analyzer, such as the Malvern Mastersizer or another instrument of equal or better sensitivity, the diameter data is preferably reported as a volume distribution. Thus the reported median for a population of particles will be volume-weighted, with about one-half of the particles, on a volume basis, having diameters less than the median diameter for the population. Typically, the median major dimension of the particles of the parenchymal cellulose composition is within the range of 25-75 µm. More preferably the median major dimension of the particles of the parenchymal cellulose composition is within the range of 35-65 µm. Typically at least about 90%, on a volume basis, of the particles has a diameter less than about 120 µm, more preferably less than 110 µm, more preferably less than 100 µm. Preferably, the particulate cellulose material has a volume-weighted median minor dimension larger than 0.5 µm, preferably larger than 1 µm.

The compositions used in accordance with this invention are characterized by the fact that the majority of the cellulose material is present in the form of particles that are distinct from the nanofibrilised cellulose described in the prior art in that the cellulose nanofibrils are not substantially unraveled, as discussed before. Preferably, less than 10%, or more preferably less than 1% or less than 0.1% by dry weight of the cellulose within the composition is in the form of nanofibrillated cellulose. This is advantageous as nanofibrillated cellulose negatively affects the redispersability of the material, as indicated herein before. By 'nanofibrils' we refer to the fibrils making up the cellulose fibers, typically having a width in the nanometer range and a length of between up to 20 µm. The nomenclature used in the field over the past decades has been somewhat inconsistent in that the terms 'microfibril' and 'nanofibril' have been used to denote the same material. In the context of this invention, the two terms are deemed to be fully interchangeable.

The plant parenchymal cellulose material that is used in accordance with the invention has been treated, modified and/or some components may have been removed but the cellulose at no time has been broken down to individual microfibrils, thereby losing the structure of plant cell wall sections.

As mentioned before, the cellulose material used in accordance with this invention has a reduced pectin content, as compared to the parenchymal cell wall material from which it is derived. Removal of some of the pectin is believed to result in enhanced thermal stability. The term "pectin" as used herein refers to a class of plant cell-wall heterogeneous polysaccharides that can be extracted by treatment with acids and chelating agents. Typically, 70-80% of pectin is found as a linear chain of α-(1-4)-linked D-galacturonic acid monomers. The smaller RG-I fraction of pectin is comprised of alternating (1-4)-linked galacturonic acid and (1-2)-linked L-rhamnose, with substantial arabinogalactan branching emanating from the L-rhamnose residue. Other monosaccharides, such as D-fucose, D-xylose, apiose, aceric acid, Kdo, Dha, 2-O-methyl-D-fucose, and 2-O-methyl-D-xylose, are found either in the RG-II pectin fraction (<2%), or as minor constituents in the RG-I fraction. Proportions of each of the monosaccharides in relation to D-galacturonic acid vary depending on the individual plant and its micro-environment, the species, and time during the growth cycle. For the same reasons, the homogalacturonan and RG-I fractions can differ widely in their content of methyl esters on GalA residues, and the content of acetyl residue esters on the C-2 and C-3 positions of GalA and neutral sugars. It is preferred that the particulate cellulose material of the invention comprises less than 5 wt.% of pectin, by dry weight of the particulate cellulose material, more preferably less than 2.5 wt.%. The presence of at least some pectin in the cellulose material is nevertheless desired. Without wishing to be bound by any theory it is assumed that pectin plays a role in the electrostatic interactions between particles contained in the material and/or in supporting the network/structure of the cellulose. Hence, it is preferred that the particulate cellulose material contains at least 0.5 wt% of pectin by dry weight of the particulate cellulose material, more preferably at least 1 wt.%.

As mentioned before, the cellulose material used in accordance with this invention has a certain minimum content of hemicellulose. The term "hemicellulose" refers to a class of plant cell-wall polysaccharides that can be any of several homo- or heteropolymers. Typical examples thereof include xylane, arabinane xyloglucan, arabinoxylan, arabinogalactan, glucuronoxylan, glucomannan and galactomannan. Monomeric components of hemicellulose include, but are not limited to: D-galactose, L-galactose, D-mannose, L-rhamnose, L-fucose, D-xylose, L-arabinose, and D-glucuronic acid. This class of polysaccharides is found in almost all cell walls along with cellulose. Hemicellulose is lower in weight than cellulose and cannot be extracted by hot water or chelating agents, but can be extracted by aqueous alkali. Polymeric chains of hemicellulose bind pectin and cellulose in a network of cross-linked fibers forming the cell walls of most plant cells. Without wishing to be bound by any theory, it is assumed that the presence of at least some hemicellulose is important to the structural organization of the fibers making up the particulate material. Preferably the particulate cellulose material comprises, by dry weight of the particulate cellulose material, 1-15 wt% hemicellulose, more preferably 1-10 wt% hemicellulose, most preferably 1-5 wt% hemicellulose.

The parenchymal cellulose composition used in accordance with this invention typically can comprise other materials besides the particulate cellulose material, as will be understood by those skilled in the art. Such other materials can include, e.g., remnants from (the processing of) the raw plant cell wall source (other than the particulate cellulose material of the invention) and any sort of additive, excipient, carrier material, etc., added with a view to the form, appearance and/or intended application of the composition.

The compositions used in accordance with this invention, typically may take the form of an aqueous suspension or paste like material comprising dispersed therein the particulate cellulose material of this invention. In an embodiment, an aqueous soft solid like dispersion is provided comprising at least 10% particulate cellulose material solids content. The composition may comprise at least 20% particulate cellulose material solids content. The composition may comprise at least 30% particulate cellulose material solids content.

A parenchymal cellulose material as described here above can be obtained using a specific process, which process involves a step of mild alkali treatment to hydrolyse the cell wall material followed by an intense homogenization process which does however not result in the complete unraveling of the material to its individual nanofibrils.

Accordingly, a method of preparing a parenchymal cellulose composition as described in the foregoing, method comprises the steps of;
a) providing a parenchymal cell containing vegetable pulp;
b) subjecting the parenchymal cell containing vegetable pulp to chemical and/or enzymatic treatment resulting in partial degradation and/or extraction of pectin and hemicellulose, wherein the mixture may be homogenized once or several times by applying low shear force during and/or after said chemical and/or enzymatic treatment;
c) subjecting the material resulting from step b) to a high shear process, wherein the particle size of the cellulose material is reduced so as to yield a particulate material having a volume-weighted median major dimension within the range of 25-75 µm, as measured by laser diffractiometry;
d) removing liquid from the mass obtained In step c).

The parenchymal cell containing vegetable pulp used as the starting material typically comprises an aqueous slurry comprising ground and/or cut plant materials, which often can be derived from side streams of other processes, such as citrus peels, sugar beet pulp, sunflower residues, pomace residues, etc.

Particularly preferred is the use of fresh, pressed-out sugar beet pulp from which the sugars have been extracted and which has a dry solids content of 10-50 wt.%, preferably 20-30 wt.%, for example approximately 25 wt.%. Sugar beet pulp is the production residuum from the sugar beet industry. More specifically, sugar beet pulp is the residue from the sugar beet after the extraction of sucrose there from. Sugar beet processors usually dry the pulp. The dry sugar beet pulp can be referred to as "sugar beet shreds". Additionally, the dry sugar beet pulp or shreds can be formed and compressed to produce "sugar beet pellets". These materials may all be used as the starting material, in which case step a) will comprise suspending the dry sugar beet pulp material in an aqueous liquid, typically to the afore-mentioned dry solids contents. Preferably however, fresh wet sugar beet pulp is used as the starting material.

Another preferred starting material is ensilaged sugar beet pulp. As used herein, the term "ensilage" refers to the conservation in a moist state of vegetable materials as a result of acidification caused by anaerobic fermentation of carbohydrates present in the materials being treated. Ensilage is carried out according to known methods with pulps preferably containing 15 to 35% of dry matter. Ensilage of sugar beets is continued until the pH is at least less than about 5 and greater than about 3.5. (see US 6,074,856). It is known that pressed beet pulps may be ensilaged to protect them from unwanted decomposition. This process is most commonly used to protect this perishable product, the other alternative being drying to 90% dry matter. This drying has the disadvantage of being very energy-intensive. The fermentation process starts spontaneously under anaerobic conditions with the lactic acid bacteria present. These microorganisms convert the residual sucrose of the pressed beet pulp to lactic acid, causing a fall in the pH and hence maintaining the structure of the beet pulp.

In an embodiment the parenchymal cell containing vegetable pulp is washed in a flotation washer before the chemical or enzymatic treatment is carried out, in order to remove sand and clay particles and, in case ensilaged sugar beet pulp is used as a starting material, in order to remove soluble acids.

The chemical and/or enzymatic treatment results in the degradation and/or extraction of at least a part of the pectin and hemicelluloses present in the parenchymal cell containing vegetable pulp, typically to monosaccharides, disaccharides and/or oligosaccharides. However, as indicated above, the presence of at least some non-degraded pectin, such as at least 0.5 wt%, and some non-degraded hemicellulose, such as 1-15 wt%, is preferred. Hence, step b) typically comprises partial degradation and/or extraction of the pectin and hemicellulose, preferably to the extent that at least 0.5 wt.% of pectin and at least 1 wt.% of hemicellulose remain. It is within the routine capabilities of those skilled in the art to determine the proper combinations of reaction conditions and time to accomplish this.

The term monosaccharide as used herein has its normal scientific meaning and refers to a monomeric carbohydrate unit. The term disaccharide as used herein has its normal scientific meaning and refers to a carbohydrate of two covalently bound monosaccharides. The term oligosaccharide as used herein has its normal scientific meaning and refers to a carbohydrate of three to ten covalently bound monosaccharides.

Preferably, the chemical treatment as mentioned in step b) of the above mentioned method comprises:
i) mixing the parenchymal cell containing vegetable pulp with a 0.1-1.0 M alkaline metal hydroxide, preferably 0.3-0.7 M alkaline metal hydroxide; and
ii) heating the mixture of parenchymal cell containing vegetable pulp and alkaline metal hydroxide to a temperature within the range of 80-120 °C for a period of at least 10 minutes, preferably at least 20 minutes, more preferably at least 30 minutes.

The use of alkaline metal hydroxides, especially sodium hydroxide, in the above method, is necessary to remove pectin and hemicelluloses from the cellulose to the desired extent. The alkaline metal hydroxide may be sodium hydroxide. The alkaline metal hydroxide may be potassium hydroxide. The alkaline metal hydroxide may be at a concentration of at least 0.2 M, at least 0.3 M, or at least 0.4 M. The alkaline metal hydroxide, preferably is at less than 0.9 M, less than 0.8 M, less than 0.7 M or less than 0.6 M.

The use of relatively low temperatures in the present chemical process allows the vegetable material pulp to be processed with the use of less energy and therefore at a lower cost than methods known in the art employing higher temperatures. In addition, use of low temperatures and pressures ensures that minimum cellulose nanofibers are produced. Cellulose nanofibers affect the viscosity of the composition and make it more difficult to rehydrate the composition after dehydration. The vegetable material pulp may be heated to at least 80°C. Preferably, the vegetable material pulp is heated to at least 90°C. Preferably, the vegetable material pulp is heated to less than 120 °C, preferably less than 100°C. As will be appreciated by those skilled in the art, the use of higher temperatures, within the indicated ranges, will reduce the processing times and *vice versa.* It is a matter of routine optimization to find the proper set of conditions in a given situation. As mentioned above, the heating temperature is typically in the range of 80-120°C for at least 10 minutes, preferably at least 20 minutes, more preferably at least 30 minutes. If the heating temperature in step ii) is between 80-100 °C, the heating time may be at least 120 minutes. Preferably, step ii) comprises heating the mixture to a temperature of 90-100 °C for 120-240 minutes, for example to a temperature of approximately 95 °C for about 180 minutes. In another embodiment of the invention, the mixture is heated above 100 °C, in which case the heating time can be considerably shorter. In a preferred embodiment of the present invention step ii) comprises heating the mixture to a temperature of110-120 °C for 10-50 minutes, preferably 10-30 minutes.

Alternatively or additionally, at least a part of the pectin and hemicelluloses may be degraded by treatment of the vegetable pulp with suitable enzymes. Preferably, a combination of enzymes is used, although it may also be possible to enrich the enzyme preparation with one or more specific enzymes to get an optimum result. Generally an enzyme combination is used with a low cellulase activity relative to the pectinolytic and hemicellulolytic activity. In a preferred embodiment of the present invention such a combination of enzymes, has the following activities, expressed as percentage of the total activity of the combination:
- cellulase activity of 0-10%;
- pectinolytic activity of 50 - 80%; and
- hemicellulase activity of at least 20- 40%

The enzyme treatments are generally carried out under mild conditions, e.g. at pH 3.5-5 and at 35-50°C , typically for 16-48 hours, using an enzyme activity of e.g. 65.000-150.000 units / kg substrate (dry matter). It is within the routine capabilities of those skilled in the art to determine the proper combinations of parameters to accomplish the desired rate and extent of pectin and hemicellulose degradation.

Before, during or after step b) the mixture is preferably homogenized once or several times by applying low shear force. Low shear force can be applied using standard methods and equipment known to those skilled in the art, such as conventional mixers or blenders. Preferably, the step of homogenisation at low shear is carried out for at least 5 minutes, preferably at least 10 minutes, preferably at least 20 minutes. Typically low shear mixing is done at least once during step b), preferably at least twice, more preferably at least three times. In a preferred embodiment of the invention low shear mixing is performed, for at least one fourth of the total duration of step b), preferably at least one third of the total time of step b), more preferably at least half the time. It has been found that it is advantageous to homogenise at low shear at this stage, as it helps breaking the pulp down into individual cells, which are then in turn, during the treatment of step c), broken up into cellulose platelets.

Step c) typically involves high shear treatment of the mass resulting from step b), which will typically result in cellulose platelets being e.g. less than half the size of the parent cells, preferably less than one third the size of the parent cells. As mentioned before, the inventors have found that it is important to retain part of the structure in the cellulose particles to ensure that the composition provides the advantageous characteristics described herein. As will be understood from the foregoing, the processing during step d) should not result in the complete or substantial unraveling to nanofibrils.

The process of obtaining the desired particle size characteristics of the cellulose material in step c) is not particularly limited and many suitable methods are known to those skilled in the art. Examples of suitable size reducing techniques include grinding, crushing or microfluidization Suitably, the process is conducted as wet processes, typically by subjecting the aqueous liquid from step b), which may e.g. contain 1 to 50 % cellulosic material, to grinding, crushing, micro fluidization or the like. Preferred grinding methods include: grinding using stirring blades such as unidirectional rotary-, multi-axis rotary-, reciprocal inverse-, vertical motion-, rotary and vertical motion-, and duct line-system stirring blades, such as portable mixers, solid mixers, and lateral mixers; jet-system stirring grinding using e.g. line mixers; grinding using high-shear homogenizers, high-pressure homogenizers, ultrasonic homogenizers, and the like; rotary extrusion-system grinding using kneaders; and grinding combining consolidation with shearing, such as roll mills, ball mills, vibratory ball mills, and bead mills. A suitable crushing method includes screen system crushing using e.g. screen mills and hammer mills; blade rotating shear screen system crushing using e.g. flash mills; air jet system crushing using e.g. jet mills; crushing combining consolidation with shearing, using e.g. roll mills, ball mills, vibratory ball mills, and bead mills; and a stirring blade system crushing method. These methods may be used alone or in combination. Most preferred examples of high shear equipment for use in step c) include friction grinders, such as the Masuko supermasscolloider; high pressure homogenizers, such as a Gaulin homogeninizer, high shear mixers, such as the Silverson type FX; in line homogenizer, such as the Silverson or Supraton in line homogenizer; and microfluidizers. The use of this equipment in order to obtain the particle properties required by this invention is a matter of routine for those skilled in the art. The methods described here above may be used alone or in combination to accomplish the desired size reduction.

In a preferred embodiment, heating is discontinued after step c) and the mass may be allowed to cool in between steps c) and d) or it may be transferred to the homogenizer directly, where no additional heating takes place. In a preferred embodiment step c) is performed at ambient temperature.

Preferably, the particle size of the cellulose is reduced before and a separation on the basis of particle size is subsequently carried out. Examples of useful separation techniques are sieve classification and separations using a cyclone or centrifuge.

The aim of the removal of water during step d) is primarily to remove a substantial fraction of dissolved organic material as well as a fraction of unwanted dispersed organic matter, i.e. having a particle size well below the particle size range of the particulate cellulose material.

In view of the first objective, it is preferred not to use methods relying on evaporation, as will be understood, since this will not remove any of the dissolved salts, pectin, proteins, etc., which are exactly the components to be washed out by this step. Preferably, step d) does not comprise a drying step, such as evaporation, vacuum drying, freeze-drying, spray-drying, etc. In one preferred embodiment, the mass may be subjected to microfiltration, dialysis, centrifuge decantation or pressing.

As will be understood by those skilled in the art, it is possible to incorporate multiple processing steps in order to achieve optimal results. For example, an embodiment is envisaged wherein step d) comprises subjecting the mixture to microfiltration, dialysis or centrifuge decantation, or the like, followed by a step of pressing the composition.

As will be understood by those skilled in the art, step d) may also comprise the subsequent addition of water or liquid followed by an additional step of removal of liquid, e.g. using the above described methods, to result in an additional washing cycle. This step may be repeated as many times as desired in order to achieve a higher degree of purity.

Preferably, following step d), the composition is added to an aqueous medium and the cellulose particles within the composition are rehydrated and uniformly suspended within the aqueous medium under low shear mixing. Rehydration under low shear mixing ensures that the energy cost to rehydrate is low and that the cellulose platelets are not damaged, or that a significant proportion of the cellulose platelets are not damaged during the mixing process.

Once compositions comprising the cellulose species have been produced, it is often desirable to increase the concentration of the cellulose species to reduce the volume of the composition and thereby reduce storage and transport costs. Accordingly, the method produces a composition of cellulose platelets that is concentrated to at least 5 wt%, preferably at least 10 wt%, solids that may be then be added in small quantities to aqueous media to modify the properties of said media. The high concentration of the composition allows the composition to occupy a smaller volume, and therefore reduces the costs for storage and transportation of the composition.

As mentioned before, the composition can be re-dispersed into aqueous media with low shear mixing. For example, the composition may be rehydrated and re-dispersed into aqueous media using a stirrer with paddles rotating with a tip speed of 1.3 m/s.

An aspect of the present invention concerns a water-borne acrylic paint or coating composition comprising an aqueous medium, a parenchymal cellulose composition comprising a particulate material according to any of the foregoing dispersed in said aqueous medium and an acrylic component.

In general, water-borne paint or coating compositions are formulated on the base of water as the major solvent, said solvent serving as a vehicle carrying the solid components which generally comprise binders, pigments and additives. The adjective 'water-borne' as regards the paint or coating composition and 'aqueous' as regards the medium means in the context of the present invention that at least 80 wt.% of the solvent medium consists of water, preferably between 80 and 98 wt.%, even more preferably between 85 and 95 wt.%.

The aqueous medium may also contain one or more hydrocarbon solvents, to control for example the coalescence, wettability and viscosity of the acrylic paint or coating composition. Typically, the amount of hydrocarbon solvents is less than 20 wt.%, preferably between 2 and 20 wt.%, even more preferably between 5 and 15 wt.%, based on the weight of the solvent medium. In an embodiment, the one or more hydrocarbon solvents are chosen from solvents that are not classified as VOC.

VOCs are organic chemicals that have a high vapor pressure at ordinary roomtemperature conditions. In the context of the present invention, VOCs are organic compounds having at a temperature of 20°C a vapor pressure of 0.01 kPa or more, or having a corresponding volatility under particular conditions of use. An organic compound is defined as any compound containing at least the element carbon and one or more of hydrogen, halogens, oxygen, sulphur, phosphorus, silicon, or nitrogen, with the exception of carbon oxides and inorganic carbonates and bicarbonates. Methane, ethane, CO, CO2, organometallic compounds and organic acids are excluded from this definition. For hydrocarbon solvents, a vapour pressure of 0.01 kPa at 20°C roughly corresponds to a boiling point or initial boiling point in the range 215-220°C.

The term acrylic component in the context of the present invention relates to molecules, oligomers and polymers that carry at least one acrylic group. The term 'acrylic component' is deemed to be fully interchangeable with the term 'acrylate' as commonly used in the field of paints and coatings for esters of acrylic acid. In the context of this invention acrylic groups also encompass methacrylic groups.

The acrylic component can typically be emulsified or dispersed in the aqueous medium. The amount of the acrylic component in the water-borne acrylic paint or coating compositions according to the present invention can vary within a wide range. Typically, the amount of the acrylic component is between 10 and 55 wt.%, based on the total weight of the water-borne acrylic paint or coating composition. The maximum possible amount of the acrylic component in the water-borne acrylic paint or coating composition depends among other things on the presence of other solid components, such as pigments and fillers. Typically, the maximum solids content of the water-borne acrylic paint or coating compositions is around 60 wt.%. In a preferred embodiment, the amount of the acrylic component, based on dry weight, is between 10 and 55 wt.%, while the total solids content of the water-borne acrylic paint or coating compositions is between 30 and 60 wt.%.

The content of dry weight of parenchymal cellulose particulate material in the water-borne acrylic paint or coating compositions can vary within a wide range. However, it is advantageously between 0.05 and 2 wt.% based on the total weight of the composition.

The amount of dry weight of parenchymal cellulose particulate material is typically between 0.10 and 4 wt.%, more preferably between 0.8 and 2 wt.%, even more preferably between 1.3 and 1.6 wt. %, based on the total solids content of the water-borne acrylic paint or coating composition.

In a preferred embodiment, the ratio of the parenchymal cellulose particulate material to the acrylic component, based on dry weight, is between 1:15 and 1:100, preferably between 1:18 and 1:40, even more preferably between 1:20 and 1:30.

The acrylic component is typically emulsified or dispersed in the aqueous medium. The term 'dispersion' generally refers to a mixture of at least two substances, one of which (the dispersed phase) is distributed in the form of particles or droplets throughout another substance (the continuous phase, dispersion medium). Consequently, in the context of the present invention the term dispersion particularly refers to acrylic component distributed in the form of particles or droplets in the aqueous medium. In case the dispersed acrylic component is liquid-or liquid-like at ambient temperature, the dispersion is usually referred to in the art as an acrylic emulsion or latex (plural: latices). In the context of the present invention, and as is common practice in the art, the terms acrylic dispersion, emulsion and latex are considered interchangeable.

Hence, in a further embodiment, the aqueous acrylic paint or coating composition is a water-borne acrylic dispersion paint or coating composition.

Acrylic water-borne dispersion paint or coating compositions are usually prepared by a process called emulsion polymerization. The acrylic monomers typically have low solubility in water, but can be emulsified into monomer droplets by using surfactant. Excess surfactant forms micelles, and it is within the surfactant micelles where the free radical polymerization process is initiated by water soluble initiators. Because they have a low but finite water solubility, acrylic monomers can be transported from the monomer droplets, through the aqueous medium, and into the micelles where they become part of the growing polymer chain. As the polymer chains grow, a colloidal particle forms within the micelles. The resulting acrylic polymer forms a stable dispersion of polymer particles in the aqueous medium. Each particle comprises polymer chains of high molecular weight, typically between 100 kD to 1000 kDa.

The acrylic component constituting the dispersed phase may be a mixture of different molecules, oligomers and polymers, each carrying at least one acrylic group. Copolymers of acrylates, such as styrene acrylates and urethane acrylates are also envisaged. In a preferred embodiment the acrylic component comprises a styrene acrylate copolymer.

The average molecular weight (Mn) of the acrylic component in the water-borne acrylic dispersion paint or coating composition is typically between 100 and 1000 kDa.

The process of emulsion polymerization, including the choice and the amount of the surfactant and initiator, the choice of monomers to arrive at a certain T_{g} and the conditions to obtain the required molecular weight, are fully within the skills of the artisan.

As explained herein before, the addition of the parenchymal cellulose composition according to any of the foregoing improves film-formation properties of water-borne acrylic coating compositions even at reduced levels of coalescent. Coalescents are often classified as volatile organic compounds. Hence, the coating compositions according to the invention allows for a reduction of the amount of VOCs.

In a preferred embodiment the amount of VOCs in the water-borne acrylic coating compositions according to the invention is lower than 250 g/liter, lower than 100 g/liter, lower than 50 g/liter, lower than 40 g/liter, lower than 30 g/liter, or lower than 20 g/liter. Typically, the total amount of VOC coalescent can be reduced by 50% compared to conventional water-borne acrylic coating compositions by using the particulate parenchymal cellulose material according to the invention.

The water-borne paint or coating compositions according to the invention may further contain a colorant to impart color to the paints and coatings. The colorant is chosen from the group consisting of dyes, pigment, fluorescing agents, or combinations thereof. Preferably, the colorant is a pigment. In addition to imparting color, pigments may further protect the coating or paint as well as the coated substrate from UV-light and may further increase hardness.

Consequently, in a preferable embodiment, the colorant is a pigment. Pigments that can be used in the context of the present invention may be of natural, synthetic, organic, and/or inorganic nature. Non-limiting examples are chosen from the group consisting of Pigment Yellow 1, Pigment Yellow 3, Pigment Yellow 12, Pigment Yellow 13, Pigment Yellow 14, Pigment Yellow 17, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 114, Pigment Yellow 121, Pigment Yellow 126, Pigment Yellow 127, Pigment Yellow 136, Pigment Yellow 174, Pigment Yellow 176, 25 Pigment Yellow 188, Pigment Orange 5, Pigment Orange 13, Pigment Orange 16, Pigment Orange 34, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 112, Pigment Red 170, Pigment Red 210, Pigment Red 238, Pigment Blue 15, Pigment Blue 15:1, Pigment Blue 15:2, Pigment Blue 15:3, Pigment 30 Blue 15:4, Pigment Green 7, Pigment Green 36, Pigment Violet 23, Pigment Black 7, titanium dioxide (TiO2), zinc oxide (ZnO), carbon black, iron (II) oxide (FeO), and the like. Combinations of different pigments are also envisaged.

In the context of the present invention, pigments also encompass fillers and extenders. Fillers and extenders commonly are natural inorganic materials added to paint or coating formulations in order to increase volume, increase paint or coating film thickness, and impart toughness and abrasion resistance to the paint or coating. Examples of fillers and extenders that can be suitably applied in the water-borne acrylic paint or coating compositions are chosen from the group consisting of quartz sand (SiO₂), talc, barite (BaSO₄), kaoline clay and limestone (CaCO₃). A preferred filler is talc.

The amount of pigments, including fillers and extenders, is usually expressed as 'volume of pigment/volume of total solids *100%' in the paint or coating, abbreviated as %PVC. Typically, a high %PVC-value causes cracking during drying of water-borne acrylic paint or coating compositions. The benefits of the present invention are therefore especially pronounced at high %PVC-values. Consequently, the %PVC-value in the paint and coating compositions according to the present invention is preferably between 5 and 75%, even more preferably between 20 and 30%.

Besides the parenchymal cellulose composition comprising particulate material, the acrylic component, pigments and fillers, the water-borne acrylic paint or coating composition according to the invention can comprise one or more conventional paint or coating additives, as will be understood by those skilled in the art. Such additives are added to provide various specific functional characteristics. As will be understood by those skilled in the art and as explained herein before, the additives are preferably not classified as VOCs.

Flash rust or corrosion is a significant problem for water-borne paints or coatings applied over steel. Flash rusting is corrosion from steel bleeding through a coating creating a stain. Examples of flash rust or corrosion inhibitors that can be applied in the water-based acrylic systems according to the invention are sodium nitrite and zinc salts of phthalic acid. Typically, the amount of flash rust inhibitor applied in the coating composition is between 0.1 and 1.5 wt.%, based on the total weight of the water-borne acrylic paint or coating composition.

Foam can also create problems during application of the paint or coating composition to the substrate or by creating surface defects in the dry film that reduce both the protective and aesthetic qualities of the finished surface. Hence, in a preferred embodiment, the water-borne acrylic paint or coating compositions comprise a defoamer. It is within the skills of the artisan to select a defoamer compatible with water-borne acrylic systems. Typically, the amount of defoamer applied in the coating composition is between 0.01 and 0.5 wt.%, based on the total weight of the water-borne acrylic paint or coating composition.

In case the water-borne paint or coating composition is a water-borne acrylic dispersion paint or coating composition, the dispersed particles need to coalesce during drying to form a continuous film. The lowest temperature at which coalescence of the particles occurs is called the minimum film formation temperature (MFFT) which depends among other features on the T_{g} of the acrylic component and on the processing temperature. It is important that the water-borne acrylic dispersion paint or coating composition forms films at a sufficiently fast rate and/or at low processing temperatures. In a preferred embodiment the MFFT is between 2 and 20°C, more preferably between 4 and 15°C. Such a MFFT often requires the addition of coalescents. Hence, in a preferred embodiment, the water-borne acrylic dispersion paint or coating compositions comprise between 0.05 and 15 wt.% of a coalescent, more preferably between 0.1 and 10 wt.%, even more preferably between 0.2 and 5 wt.%, based on the total weight of the composition. As explained herein before, the coalescent is preferably not classified as VOC. A typical example of a coalescent that can be applied in the present compositions is 2,2,4-trimethyl-1,3-pentanediol monoisobutyrate (Texanol).

The water-borne acrylic paint or coating compositions may further comprise other additives commonly used in paints and coatings such as, thermally curable reactive diluents, UV absorbers, light stabilizers, free-radical scavengers, thermolabile free-radical initiators, devolatilizers, slip additives, polymerization inhibitors, emulsifiers, wetting agents, adhesion promoters, leveling agents, film-forming auxiliaries, rheology control additives, biocides and fungicide, flame retardants. These additives are exemplary and do by no means limit the invention. It is within the skills of the artisan to select additives that are compatible with water-borne acrylic systems and to choose appropriate amounts.

Another aspect of the invention concerns a method of preparing the water-borne acrylic paint or coating compositions comprising the parenchymal cellulose composition comprising particulate material according to any of the foregoing, said method comprising the steps of:
a) providing a parenchymal cellulose composition comprising particulate material according to the invention
b) providing a water-borne acrylic coating or paint composition
c) combining said parenchymal cellulose composition comprising particulate material and said water-borne acrylic coating or paint composition.

As explained herein before, the parenchymal cellulose composition can either be a dry composition or suspension in an aqueous medium. Hence, in a first embodiment, step c) encompasses combining a dry parenchymal cellulose composition and a water-borne acrylic coating or paint composition under low shear mixing. Rehydration under low shear mixing ensures that the energy cost to rehydrate is low and that the cellulose platelets are not damaged, or that a significant proportion of the cellulose platelets are not damaged during the mixing process. In a second embodiment, step c) encompasses combining a suspension of particulate parenchymal cellulose in an aqueous medium and a water-borne acrylic coating or paint composition.

In a preferred embodiment, dispersants are used to further stabilize the particulate parenchymal cellulose material in the water-borne acrylic coating or paint composition. Typically, the ratio of the dispersants to the particulate parenchymal cellulose material in the water-borne acrylic coating or paint compositions according to the invention is between 2:100 and 10:100, on a weight basis, more preferably between 3:100 and 7:100. An example of a suitable dispersant is sorbitol lauric acid ester (Span 20).

As has been mentioned in the preceding text, the parenchymal cellulose composition comprising particulate material is particularly suitable for use as an anti-cracking agent in water-borne acrylic paints or coating compositions. This use results in additional hardness and less cracking of the dry paint or coating, which allows for reduced levels of coalescents. The benefits of this use are most pronounced when the water-borne acrylic paints or coatings are applied at processing temperatures lower than the glass transition temperature of the acrylic component and/or when the water-borne acrylic paint or coating compositions have a high %PVC value.

Hence, a further aspect of the invention concerns the use of the parenchymal cellulose material comprising particulate material as defined in any of the foregoing as an anti-cracking agent in water-borne acrylic paint or coating compositions.

A further embodiment relates to the use of the parenchymal cellulose material comprising particulate material as defined in any of the foregoing as an anti-cracking agent in water-borne acrylic paint or coating compositions at processing temperatures below 10°C, more preferably below 5°C.

For a proper understanding of this document and in its claims, it is to be understood that the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

The following examples are offered for illustrative purposes only.

### Examples

### Example 1: Preparation of parenchynal cellulose composition containing particulate cellulose material for use in accordance with the invention

Fresh sugar beet pulp obtained from Suikerunie Dinteloord (NL) was washed in a flotation washer in order to remove sand, pebbles, etc.

In a stirred tank (working volume 70L) heated with steam), 16.7 kg of washed sugar beet pulp having a solids content of 15% DS (2,5 kg DS in the batch) was introduced and tab water was added to a total volume of 70 L. The mass was heated with steam and, once the temperature reached 50 °C, 1200 gram NaOH is added. Heating was continued to reach a final temperature of 95 °C. After 45 minutes at 95 °C, the mixture was subjected to low shear for 30 minutes (using a Silverson BX with a slitted screen. After a total period of 3 hours at 95 °C, low shear was applied again for 60 minutes (using the Silverson BX with an emulsor screen with appertures of 1.5 mm), during which the temperature was kept at approximately 95 °C

Reduction of the particles was done with a Gaulin high pressure homogenizer, operating at 150 bar (first stage; second stage was 0 bar). The mixture was homogenized 6 times. This step was performed at ambient temperature. The mixture had been allowed to cool to ambient temperature before being subjected to the high pressure homogenization treatment.

The homogenized mass was subsequently introduced in a mixing tank and heated to a temperature of 80-85 °C, where after a microfiltration step was performed using a ceramic membrane with a pore size of 1.4 µm. The permeate was replaced with demineralized water. As soon as the conductivity of the retentate reached 1mS/cm, microfiltration was discontinued. The dry solids content was between 0.5 and 1%.

This end-product was subsequently concentrated in a filter bag having pores of 100 µm to reach a dry solids content of 2%.

The material was analyzed using a Malvern Mastersizer, confirming a median (volume-weighted) major dimension of the particles contained within the material of 43.65 µm, with approximately 90 % of the material (on the basis of volume) having a particle size of below 100 µm

### Example 2: Preparation of parenchynal cellulose composition containing particulate cellulose material for use in accordance with the invention

Fresh sugar beet pulp (320 kg, 24.1 % ds) obtained from Suikerunie Dinteloord (NL) was washed in a flotation washer in order to remove sand, pebbles, etc.

The washed sugar beet puIp was transferred to a stirred tank (1000L) and dilutued to a ds concentration of 8% (800 kg). Multifect pectinase FE (Genencor, 139 units/ g ds) was added and the suspension was heated to 45°C. After 48 h the suspension was pressed using a membrane filterpress (TEFSA) and the resulting solid material containing the cellulose material was isolated (216 kg 12 % ds).

A portion of the resulting cellulose material (20 kg) was introduced in a stirred tank (working volume 70 L) and tab water was added to a total volume of 70 L. The mixture was heated to 95°C and subjected to low shear for a total period of 3 hours at 95°C (using a Silverson BX with a slitted screen. Then, low shear was applied for a further 60 minutes (using the Silverson BX with an emulsor screen with apertures of 1.5 mm), during which the temperature was kept at approximately 95 °C

Reduction of the particles was done with a Gaulin high pressure homogenizer, operating at 150 bar (first stage; second stage was 0 bar). The mixture was homogenized 6 times. This step was performed at ambient temperature. The mixture had been allowed to cool to ambient temperature before being subjected to the high pressure homogenization treatment.

The homogenized mass was subsequently introduced in a mixing tank and heated to a temperature of 80-85 °C, where after a microfiltration step was performed using a ceramic membrane with a pore size of 1.4 µm. The permeate was replaced with demineralized water. As soon as the conductivity of the retentate reached 1mS/cm, microfiltration was discontinued. The dry solids content was between 0.5 and 1%.

This end-product was subsequently concentrated in a filter bag having pores of 100 µm to reach a dry solids content of 2%.

The material was analyzed using a Malvern Mastersizer, confirming a median (volume-weighted) major dimension of the particles contained within the material of 51.03 µm, with approximately 90 % of the material (on the basis of volume) having a particle size of below 100 µm.

### Example 3: Anti-cracking properties of the parenchymal cellulose material in water-borne acrylic paint or coating compositions

In this example, the following components are used:
- Setaqua 6462, water-borne styrene-acrylate dispersion, solids content 44 wt.%, MFFT 25°C, Nuplex Resins
- Water mill base; amount of water required to disperse solids in the mill
- Span 20, sorbitol lauric acid ester, Croda
- Disperbyk-190, VOC-free wetting and dispersing additive for aqueous pigmented systems, Byk
- Byk 022, VOC-free silicone defoamer for aqueous coatings, Byk
- BYK 028, VOC-free silicone defoamer for aqueous dispersion coatings, Byk
- Texanol, 2,2,4-trimethyl-1,3-pentanediol monoisobutyrate, Eastman
- Finntalc M40, magnesium-silicate talc powder, Mondo Minerals
- Propylene glycol
- Halox Flash X-330, corrosion/flash inhibitor, Halox
- Acrysol RM-825, non-ionic urethane rheology modifier, designed for formulating paints, Rohm and Haas
- Kronos 2300, titanium dioxide pigment, Kronos

In order to assess the effect of the particulate parenchymal cellulose material according to the invention on cracking behaviour of films, different water-borne acrylic compositions were prepared. The compositions either comprise particulate parenchymal cellulose material according to the invention or no cellulose material at all. In addition, the amount of the coalescent propylene glycol (PG) was varied between 0 wt.% and 16 wt.%.

The different types of particulate parenchymal cellulose material used are described in Table 1.

**Table 1: parenchymal cellulose material according to the invention**

| **Name** | **Source** | **Par. cellulose: dispersant (wt:wt)** | **Solids content (wt.%)** |
|---|---|---|---|
| ST80 | sugar beet | 100:5 | 26.5 |
| ST100 | sugar beet | 100:5 | 28.9 |

Before adding the particulate parenchymal cellulose material to the water-borne acrylic composition, the parenchymal cellulose composition comprising particulate material described in Table 1 is first dispersed into water using a rotor stator. The resulting water batches, having a solids content between 15.5 and 16.9 wt.%, were allowed to stand for one day before they were added into the water-borne acrylic coating or paint compositions. The theoretical solids content of the water batches is given in Table 2.

**Table 2: theoretical solids content of parenchymal cellulose water batches**

| **Name** | **Source** | **Par. cellulose:dispersant (wt:wt)** | **Theoretical water batch solids content (wt.%)** |
|---|---|---|---|
| ST80 | sugar beet | 100:5 | 4.33 |
| ST100 | sugar beet | 100:5 | 4.88 |

In Tables 3 and 4, water-borne acrylic compositions without particulate parenchymal cellulose material are given. In Tables 5 and 6, water-borne acrylic compositions comprising different types of parenchymal cellulose material according to the invention are given. In all cases, the ratio of the parenchymal cellulose material to the dispersant Span 20 is 100:5 on a weight basis. As explained in the foregoing, the particulate parenchymal cellulose material is added to the acrylic composition in the form of a water batch.

**Table 3: water-based acrylic composition without particulate parenchymal cellulose material**

| | **LG-B (No PG)** | **LG-B (3 wt.% PG)** | **LG-B (6 wt.% PG)** | **LG-B (9 wt.% PG)** | **LG-B (16 wt% PG)** |
|---|---|---|---|---|---|
| **Binder (wt.%)** | | | | | |
| Setaqua 6462 | 48.01 | 46.56 | 45.13 | 43.68 | 40.33 |

| **Additives (wt.%)** | | | | | |
|---|---|---|---|---|---|
| Water mill base | 5.83 | 5.66 | 5.48 | 5.31 | 4.90 |
| Disperbyk 190 | 2.82 | 2.73 | 2.65 | 2.56 | 2.37 |
| BYK 022 | 0.12 | 0.12 | 0.12 | 0.11 | 0.10 |
| Fib+Span 20 (100:5) WB | 0.00 | 0.00 | 0.00 | 0.00 | 0.00 |
| Demi water (rest) | 14.63 | 14.19 | 13.75 | 13.31 | 12.29 |
| Propylene glycol | 0.00 | 2.99 | 5.98 | 8.99 | 15.98 |
| Texanol | 0.78 | 0.77 | 0.75 | 0.72 | 0.67 |
| BYK 028 | 0.11 | 0.11 | 0.10 | 0.10 | 0.09 |
| Halox Flash X-330 | 1.04 | 1.01 | 0.98 | 0.95 | 0.88 |
| Acrysol RM-825 | 0.46 | 0.44 | 0.43 | 0.42 | 0.38 |

| **Pigments and fillers (wt.%)** | | | | | |
|---|---|---|---|---|---|
| Kronos 2300 | 8.60 | 8.34 | 8.08 | 7.82 | 7.22 |
| Finntalc M40 | 17.61 | 17.08 | 16.55 | 16.02 | 14.79 |
| **Total** (**g**) | 100.00 | 100.00 | 100.00 | 100.00 | 100.00 |
| **%PVC** | 28.28 | 28.28 | 28.28 | 28.28 | 28.28 |
| **wt**.**% solids** | 49.50 | 48.02 | 46.54 | 45.04 | 41.59 |
| **wt**.% **fibre**, **dry** | 0.00 | 0.00 | 0.00 | 0.00 | 0.00 |

**Table 4: water-based acrylic composition without particulate parenchymal cellulose material**

| | **LG-B II (9 wt.% PG)** | **LG-B II (16 wt.% PG)** |
|---|---|---|
| **Binder (wt.%)** | | |
| Setaqua 6462 | 47.27 | 43.64 |

| **Additives (wt.%)** | | |
|---|---|---|
| Water mill base | 5.09 | 4.70 |
| Disperbyk 190 | 2.45 | 2.26 |
| BYK 022 | 0.11 | 0.10 |
| Fib+Span 20 (100:5) WB | 0.00 | 0.00 |
| Demi water (rest) | 11.60 | 10.71 |
| Propylene glycol | 9.00 | 15.98 |
| Texanol | 0.71 | 0.66 |
| BYK 028 | 0.10 | 0.09 |
| Halox Flash X-330 | 1.01 | 0.93 |
| Acrysol RM-825 | 0.38 | 0.35 |

| **Pigments and fillers (wt.%)** | | |
|---|---|---|
| Kronos 2300 | 7.23 | 6.67 |
| Finntalc M40 | 15.05 | 13.90 |
| **Total** (**g**) | 100.00 | 100.00 |
| **%PVC** | 25.58 | 25.58 |
| **wt**.**% solids** | 45.05 | 41.59 |
| **wt**.**% fibre**, **dry** | 0.00 | 0.00 |

**Table 5: water-based acrylic composition comprising ST80 particulate parenchymal cellulose material**

| | **LG-D (No PG)** | **LG-D (3 wt.% PG)** | **LG-D (6 wt.% PG)** | **LG-D (9 wt.% PG)** | **LG-D (16 wt% PG)** |
|---|---|---|---|---|---|
| **Binder (wt.%)** | | | | | |
| Setaqua 6462 | 46.40 | 45.01 | 43.62 | 42.22 | 38.98 |

| **Additives (wt.%)** | | | | | |
|---|---|---|---|---|---|
| Water mill base | 5.64 | 5.47 | 5.30 | 5.13 | 4.73 |
| Disperbyk 190 | 2.72 | 2.64 | 2.56 | 2.48 | 2.29 |
| BYK 022 | 0.12 | 0.12 | 0.11 | 0.11 | 0.10 |
| ST80+Span 20 (100:5) WB | 16.60 | 16.11 | 15.61 | 15.11 | 13.95 |
| Demi water (rest) | 0.97 | 0.94 | 0.91 | 0.88 | 0.82 |
| Propylene glycol | 0.00 | 2.99 | 5.98 | 9.00 | 15.98 |
| Texanol | 0.75 | 0.73 | 0.71 | 0.68 | 0.63 |
| BYK 028 | 0.11 | 0.10 | 0.10 | 0.10 | 0.09 |
| Halox Flash X-330 | 1.01 | 0.98 | 0.95 | 0.92 | 0.85 |
| Acrysol RM-825 | 0.36 | 0.35 | 0.34 | 0.33 | 0.30 |

| **Pigments and fillers (wt.%)** | | | | | |
|---|---|---|---|---|---|
| Kronos 2300 | 8.31 | 8.06 | 7.81 | 7.56 | 6.98 |
| Finntalc M40 | 17.02 | 16.51 | 16.00 | 15.49 | 14.30 |
| **Total** (**g**) | 100.00 | 100.00 | 100.00 | 100.00 | 100.00 |
| **%PVC** | 27.68 | 27.68 | 27.68 | 27.68 | 27.68 |
| **wt.% solids** | 48.51 | 47.06 | 45.61 | 44.14 | 40.75 |
| **wt.% fibre**, **dry** | 1.40 | 1.40 | 1.40 | 1.40 | 1.40 |

**Table 6: water-based acrylic composition comprising ST100 particulate parenchymal cellulose material**

| | **LG-E (No PG)** | **LG-E (3 wt.% PG)** | **LG-E (6 wt.% PG)** | **LG-E (9 wt.% PG)** | **LG-E (16 wt% PG)** |
|---|---|---|---|---|---|
| **Binder (wt.%)** | | | | | |
| Setaqua 6462 | 46.76 | 45.37 | 43.97 | 42.56 | 39.29 |

| **Additives (wt.%)** | | | | | |
|---|---|---|---|---|---|
| Water mill base | 5.69 | 5.52 | 5.35 | 5.18 | 4.78 |
| Disperbyk 190 | 2.75 | 2.67 | 2.59 | 2.50 | 2.31 |
| BYK 022 | 0.12 | 0.12 | 0.11 | 0.11 | 0.10 |
| ST100+Span 20 (100:5) WB | 15.05 | 14.60 | 14.15 | 13.70 | 12.65 |
| Demi water (rest) | 1.78 | 1.73 | 1.67 | 1.62 | 1.50 |
| Propylene glycol | 0.00 | 2.99 | 5.98 | 9.00 | 15.98 |
| Texanol | 0.76 | 0.73 | 0.71 | 0.69 | 0.64 |
| BYK 028 | 0.11 | 0.10 | 0.10 | 0.10 | 0.09 |
| Halox Flash X-330 | 1.02 | 0.99 | 0.95 | 0.92 | 0.85 |
| Acrysol RM-825 | 0.37 | 0.36 | 0.35 | 0.34 | 0.31 |

| **Pigments and fillers (wt.%)** | | | | | |
|---|---|---|---|---|---|
| Kronos 2300 | 8.39 | 8.14 | 7.89 | 7.64 | 7.05 |
| Finntalc M40 | 17.19 | 16.68 | 16.16 | 15.64 | 14.44 |
| **Total** (**g**) | 100.00 | 100.00 | 100.00 | 100.00 | 100.00 |
| **%PVC** | 27.78 | 27.78 | 27.78 | 27.78 | 27.78 |
| **wt.% solids** | 48.88 | 47.42 | 45.96 | 44.49 | 41.07 |
| **wt.% fibre**, **dry** | 1.26 | 1.26 | 1.26 | 1.26 | 1.26 |

Normally, the binder Setaqua 6462 used in the formulations given in Tables 3-6 requires a considerable amount of coalescent to obtain good film formation properties. If too little coalescent is added, e.g. about 3 wt.%, or too much, e.g. about 16 wt.%, the dry film will exhibit serious cracking during drying.

For those coating compositions comprising 3, 9 and 16 wt.% of the coalescent propylene glycol (PG), films having a wet thickness of 80-100 µm were prepared which were cured at 5°C for 72 hours. Pictures were taken from the cured layers using a magnification of 4x10. The pictures were taken in central parts of the coating.

As an example, reference is made to Figures 1a-1d. Figure 1a depicts a dry film obtained using a water-borne acrylic coating composition described in Table 3. The water-borne acrylic coating composition does not comprise particulate parenchymal cellulose material. The concentration of PG in the composition is 3 wt.%. Figure 1b depicts a dry film obtained using another water-borne acrylic coating composition described in Table 3. The water-borne acrylic coating composition does not comprise particulate parenchymal cellulose material. The concentration of PG in the composition is 16 wt.%.

Figure 1c depicts a dry film obtained using a water-borne acrylic coating composition described in Table 5. The water-borne acrylic coating composition comprises the ST80 particulate parenchymal cellulose material according to the invention. The concentration of PG in the composition is 3 wt.%. Figure 1d depicts a dry film obtained using another water-borne acrylic coating composition described in Table 5. The water-borne acrylic coating composition comprises the ST80 particulate parenchymal cellulose material according to the invention. The concentration of PG in the composition is 16 wt.%.

From visual inspection of the pictures with and without particulate parenchymal cellulose material, it can be concluded that adding the parenchymal cellulose material according to the invention reduces the cracking during film formation and stress during drying at all three concentrations of PG.

The cohesion and the film formation are notably improved in all cases when the particulate parenchymal cellulose material product was added. No cracking above 3% coalescent was observed for formulations using sugar beet particulate parenchymal cellulose material (ST80 and ST100), even when observed under a microscope.

Hardness values of dried acrylic pigmented formulations containing 9 wt.% of propylene glycol after curing for more than one week on glass panels at 5°C were studied using a König hardness tester. The thickness of the dried films was around 100-80 µm. The experimental results obtained are shown in Table 7. The higher the number of oscillations, the harder the dried film.

**Table 7: Hardness values of the acrylic pigmented formulations**

| **Formulation** | **Paren. cellulose material** | **No. oscillations** |
|---|---|---|
| LG-B (9 wt.% PG) | - | 24 |
| LG-B II (9 wt.% PG) | - | 24 |
| LG-D (9 wt.% PG) | ST80 | 27 |
| LG-E (9 wt.% PG) | ST100 | 27 |

A slight improvement in the hardness behaviour was found in all cases when the different particulate parenchymal cellulose materials according to the invention were added to the water-borne acrylic formulations, compared to the water-borne acrylic formulations without cellulose material.

### Conclusions

Addition of the particulate parenchymal cellulose material according to the invention to water-borne acrylic compositions reduced the cracking behaviour of dried films over a wide range of coalescent concentrations. This finding allows for a lower amount of coalescent in water-borne acrylic compositions while maintaining an optimal film formation.

Slight improvements on hardness were obtained when about 1.5 wt.%, based on the total solids content, of the particulate parenchymal cellulose material was added to the water-borne acrylic compositions.

## Claims

1. Water-borne acrylic paint or coating composition comprising an aqueous medium, a particulate parenchymal cellulose material dispersed in said aqueous medium and an acrylic component, wherein said particulate parenchymal cellulose material contains, by dry weight thereof, at least 70% cellulose, 0.5-10 % pectin and 1-15 % hemicellulose; and wherein said particulate cellulose material is **characterized by** a reported volume-weighted median major dimension within the range of 25-75 µm when measured with a Malvern Mastersizer particle size analyzer.

2. Water-borne acrylic paint or coating composition according to claim 1, wherein the particulate cellulose material is obtainable by method comprising the steps of:
a) providing a parenchymal cell containing vegetable pulp;
b) subjecting the parenchymal cell containing vegetable pulp to chemical and/or enzymatic treatment resulting in partial degradation and/or extraction of pectin and hemicellulose;
c) subjecting the material resulting from step b) to a high shear process, wherein the particle size of the cellulose material is reduced;

3. Water-borne acrylic paint or coating composition according to claim 1 or 2, wherein the particulate cellulose material is **characterized in that** at least 90%, on a volume basis, of the particles have a diameter less than 120 µm, more preferably less than 110 µm.

4. Water-borne acrylic paint or coating composition according to any one of the preceding claims, wherein the morphology of the particulate cellulose material is **characterized by** the presence of cellulose network structures.

5. Water-borne acrylic paint or coating composition according to claim 2, wherein the vegetable material pulp is sugar beet pulp.

6. Water-borne acrylic paint or coating composition according to claim 2, wherein the chemical treatment of step b) comprises:
i) mixing the parenchymal cell containing vegetable pulp with a 0.1-1.0 M alkaline metal hydroxide, preferably 0.3-0.7 M alkaline metal hydroxide;
ii) heating the mixture of parenchymal cell containing vegetable pulp and alkaline metal hydroxide to a temperature within the range of 80-120°C for a period of at least 10 minutes, preferably at least 20 minutes, more preferably at least 30 minutes.

7. Water-borne acrylic paint or coating composition according to claim 6, wherein the alkaline metal hydroxide is sodium hydroxide.

8. Water-borne acrylic paint or coating composition according to claim 6 or 7, wherein the mixture is heated to a temperature within the range of 90-100 °C during step ii).

9. Water-borne acrylic paint or coating composition according to any one of claims 5-8, wherein the particle size reduction during step c) is accomplished using a high pressure homogenizer.

10. Water-borne acrylic paint or coating composition according to claim 1, wherein the ratio of the parenchymal cellulose particulate material to the acrylic component, based on dry weight, is between 1:15 and 1:100.

11. A method of preparing a water-borne acrylic paint or coating compositions according to claim 1, said method comprising the steps of:
a) providing a parenchymal cellulose composition;
b) providing a water-borne acrylic coating or paint composition;
c) combining said parenchymal cellulose composition and said water-borne acrylic coating or paint composition.

12. Use of a particulate parenchymal cellulose material as an anti-cracking agent in water-borne acrylic paint or coating compositions, wherein the particulate parenchymal cellulose material contains, by dry weight of said particulate cellulose material, at least 70% cellulose, 0.5-10 % pectin and 1-15 % hemicelluloses; and wherein said particulate cellulose material is **characterized by** a reported volume-weighted median major dimension within the range of 25-75 µm when measured with a Malvern Mastersizer particle size analyzer.

13. Use according to claim 12, wherein the particulate cellulose material is obtainable by a method comprising the steps of:
a) providing a parenchymal cell containing vegetable pulp;
b) subjecting the parenchymal cell containing vegetable pulp to chemical and/or enzymatic treatment resulting in partial degradation and/or extraction of pectin and hemicellulose;
c) subjecting the material resulting from step b) to a high shear process, wherein the particle size of the cellulose material is reduced.

14. Use according to claim 13, wherein the use involves a processing temperature of below 10°C

15. Use according to claim 14, wherein the use involves a processing temperature of below 5°C.

## Patentansprüche

1. Wasserbasierte Acrylfarbe oder Beschichtungszusammensetzung umfassend ein wässriges Medium, ein partikelförmiges parenchymales Cellulosematerial dispergiert in dem wässrigen Medium, und einen Acrylbestandteil, wobei das partikelförmige parenchymale Cellulosematerial bezogen auf das Trockengewicht davon mindestens 70% Cellulose, 0,5-10% Pektin und 1-15% Hemicellulose enthält; und wobei das partikelförmige Cellulosematerial durch eine angezeigte volumengewichtete Median-Hauptdimension im Bereich von 25-75 µm gekennzeichnet ist, wenn sie mit einem Malvem-Mastersizer-Partikelgrößenmessgerät gemessen wird.

2. Wasserbasierte Acrylfarbe oder Beschichtungszusammensetzung nach Anspruch 1, wobei das partikelförmige Cellulosematerial durch ein Verfahren erhältlich ist, das die Schritte umfasst:
a) Bereitstellen einer parenchymzellhaltigen Pflanzenpulpe;
b) Unterziehen der parenchymzellhaltigen Pflanzenpulpe einer chemischen und/oder enzymatischen Behandlung, die einen teilweisen Abbau und/oder Extraktion von Pektin und Hemicellulose zum Ergebnis hat;
c) Unterziehen des aus Schritt b) resultierenden Materials einem Verfahren mit hoher Scherung, wobei die Partikelgröße des Cellulosematerials verringert wird.

3. Wasserbasierte Acrylfarbe oder Beschichtungszusammensetzung nach Anspruch 1 oder 2, wobei das partikelförmige Cellulosematerial **dadurch gekennzeichnet ist, dass** mindestens 90%, auf einer Volumenbasis, der Partikel einen Durchmesser von weniger als 120 µm, stärker bevorzugt von weniger als 110 µm aufweisen.

4. Wasserbasierte Acrylfarbe oder Beschichtungszusammensetzung nach einem beliebigen der voranstehenden Ansprüche, wobei die Morphologie des partikelförmigen Cellulosematerials durch die Gegenwart von Cellulose-Netzwerkstrukturen gekennzeichnet ist.

5. Wasserbasierte Acrylfarbe oder Beschichtungszusammensetzung nach Anspruch 2, wobei die Pflanzenmaterialpulpe Zuckerrübenpulpe ist.

6. Wasserbasierte Acrylfarbe oder Beschichtungszusammensetzung nach Anspruch 2, wobei die chemische Behandlung von Schritt b) umfasst:
i) Mischen der parenchymzellhaltigen Pflanzenpulpe mit einem 0,1-1,0 M Alkalimetallhydroxid, bevorzugt 0,3-0,7 M Alkalimetallhydroxid;
ii) Erhitzen des Gemisches aus parenchymzellhaltiger Pflanzenpulpe und Alkalimetallhydroxid auf eine Temperatur innerhalb des Bereichs von 80-120°C für eine Zeitdauer von mindestens 10 Minuten, bevorzugt mindestens 20 Minuten, stärker bevorzugt mindestens 30 Minuten.

7. Wasserbasierte Acrylfarbe oder Beschichtungszusammensetzung nach Anspruch 6, wobei das Alkalimetallhydroxid Natriumhydroxid ist.

8. Wasserbasierte Acrylfarbe oder Beschichtungszusammensetzung nach Anspruch 6 oder 7, wobei das Gemisch auf eine Temperatur im Bereich von 90-100°C während Schritt ii) erhitzt wird.

9. Wasserbasierte Acrylfarbe oder Beschichtungszusammensetzung nach einem beliebigen der Ansprüche 5-8, wobei die Partikelgrößenverringerung während Schritt c) unter Verwendung eines Hochdruckhomogenisators erreicht wird.

10. Wasserbasierte Acrylfarbe oder Beschichtungszusammensetzung nach Anspruch 1, wobei das Verhältnis des partikelförmigen parenchymalen Cellulosematerials zum Acrylbestandteil, basierend auf dem Trockengewicht, zwischen 1:15 und 1:100 liegt.

11. Verfahren zum Herstellen einer wasserbasierten Acrylfarbe oder Beschichtungszusammensetzungen gemäß Anspruch 1, wobei das Verfahren die Schritte umfasst:
a) Bereitstellen einer parenchymalen Cellulosezusammensetzung;
b) Bereitstellen einer wasserbasierten Acrylbeschichtung oder Farbzusammensetzung;
c) Kombinieren der parenchymalen Cellulosezusammensetzung und der wasserbasierten Acrylbeschichtung oder Farbzusammensetzung.

12. Verwendung eines partikelförmigen parenchymalen Cellulosematerials als ein Anti-Rissbildungsmittel in wasserbasierter Acrylfarbe oder Beschichtungszusammensetzungen, wobei das partikelförmige parenchymale Cellulosematerial bezogen auf das Trockengewicht des partikelförmigen Cellulosematerials mindestens 70% Cellulose, 0,5-10% Pektin und 1-15% Hemicellulosen enthält; und wobei das partikelförmige Cellulosematerial durch eine angezeigte volumengewichtete Median-Hauptdimension im Bereich von 25-75 µm gekennzeichnet ist, wenn sie mit einem Malvem-Mastersizer-Partikelgrößenmessgerät gemessen wird.

13. Verwendung nach Anspruch 12, wobei das partikelförmige Cellulosematerial durch ein Verfahren erhältlich ist, das die Schritte umfasst:
a) Bereitstellen einer parenchymzellhaltigen Pflanzenpulpe;
b) Unterziehen der parenchymzellhaltigen Pflanzenpulpe einer chemischen und/oder enzymatischen Behandlung, die einen teilweisen Abbau und/oder Extraktion von Pektin und Hemicellulose zum Ergebnis hat;
c) Unterziehen des aus Schritt b) resultierenden Materials einem Verfahren mit hoher Scherung, wobei die Partikelgröße des Cellulosematerials verringert wird.

14. Verwendung nach Anspruch 13, wobei die Verwendung eine Verarbeitungstemperatur von unter 10°C einbezieht.

15. Verwendung nach Anspruch 14, wobei die Verwendung eine Verarbeitungstemperatur von unter 5°C einbezieht.

## Revendications

1. Composition de peinture ou de revêtement acrylique diluable à l'eau, comprenant un milieu aqueux, une matière cellulosique parenchymateuse particulaire dispersée dans ledit milieu aqueux et un composant acrylique, où ladite matière cellulosique parenchymateuse particulaire contient, par poids sec de celle-ci, au moins 70% de cellulose. 0,5 à 10% de pectine et 1 à 15% d'hémicellulose ; et où ledit matériau cellulosique particulaire est **caractérisé par** une dimension principale médiane pondérée en volume rapporté dans la plage de 25 à 75 µm lorsqu'elle est mesurée avec un analyseur de taille de particule Malvern Mastersizer.

2. Composition de peinture ou de revêtement acrylique diluable à l'eau selon la revendication 1, dans laquelle la matière cellulosique particulaire peut être obtenue par un procédé comprenant les étapes consistant à :
a) fournir une cellule parenchymateuse contenant de la pulpe végétale ;
b) soumettre la cellule parenchymateuse contenant de la pulpe végétale à un traitement chimique et/ou enzymatique ayant pour résultat une dégradation partielle et/ou une extraction de pectine et d'hémicellulose ;
c) soumettre le matériau résultant de l'étape b) à un traitement de grand cisaillement, dans lequel la taille de particule de la matière cellulosique est réduite.

3. Composition de peinture ou de revêtement acrylique diluable à l'eau selon les revendications 1 ou 2, dans laquelle la matière cellulosique particulaire est **caractérisée en ce qu'**au moins 90%, sur une base de volume, des particules ont un diamètre inférieur à 120 µm, de manière plus préférée inférieure à 110 µm.

4. Composition de peinture ou de revêtement acrylique diluable à l'eau selon l'une quelconque des revendications précédentes, dans laquelle la morphologie de la matière cellulosique particulaire est **caractérisée par** la présence de structures en réseau de cellulose.

5. Composition de peinture ou de revêtement acrylique diluable à l'eau selon la revendication 2, dans laquelle la pulpe de matière végétale est de la pulpe de betterave à sucre.

6. Composition de peinture ou de revêtement acrylique diluable à l'eau selon la revendication 2, dans laquelle le traitement chimique de l'étape b) consiste à :
i) mélanger la cellule parenchymateuse contenant de la pulpe végétale avec un hydroxyde de métal alcalin 0,1 à 1,0 M, de préférence de l'hydroxyde de métal alcalin 0,3 à 0,7 M;
ii) chauffer le mélange de cellulose parenchymateuse contenant de la pulpe végétale et de l'hydroxyde de métal alcalin à une température dans la plage de 80 à 120 °C pendant une période d'au moins 10 minutes, de préférence d'au moins 20 minutes, de préférence d'au moins 30 minutes.

7. Composition de peinture ou de revêtement acrylique diluable à l'eau selon la revendication 6, dans laquelle l'hydroxyde de métal alcalin est l'hydroxyde de sodium.

8. Composition de peinture ou de revêtement acrylique diluable à l'eau selon les revendications 6 ou 7, dans laquelle le mélange est chauffé à une température comprise dans la plage de 90 à 100 °C au cours de l'étape ii).

9. Composition de peinture ou de revêtement acrylique diluable à l'eau selon l'une quelconque des revendications 5 à 8, dans laquelle la réduction de la taille des particules au cours de l'étape c) est effectuée en utilisant un homogénéiseur haute pression.

10. Composition de peinture ou de revêtement acrylique diluable à l'eau selon la revendication 1, dans laquelle le rapport de la matière particulaire de cellulose parenchymateuse sur le composant acrylique, sur la base du poids sec, est compris entre 1:15 et 1:100.

11. Méthode de préparation d'une composition de peinture ou de revêtement acrylique diluable à l'eau selon la revendication 1, la méthode comprenant les étapes consistant à :
a) fournir une composition de cellulose parenchymateuse ;
b) fournir une composition de revêtement ou de peinture acrylique diluable à l'eau ;
c) combiner ladite composition de cellulose parenchymateuse et ladite composition de revêtement ou de peinture acrylique diluable à l'eau.

12. Utilisation d'une matière cellulosique parenchymateuse particulaire en tant qu'agent anti-craquage dans des compositions de peinture ou de revêtement acryliques diluables à l'eau, dans laquelle la matière cellulosique parenchymateuse particulaire contient, en poids sec de ladite matière cellulosique particulaire, au moins 70% de cellulose. 0,5 à 10% de pectine et 1 à 15% d'hémicelluloses ; et dans laquelle ladite matière cellulosique particulaire est **caractérisée par** une dimension principale médiane pondérée en volume rapportée dans la plage de 25 à 75 µm lorsqu'elle est mesurée avec un analyseur de taille de particule Malvern Mastersizer.

13. Utilisation selon la revendication 12, dans laquelle la matière particulaire de cellulose peut être obtenue par un procédé comprenant les étapes consistant à :
a) fournir une cellule parenchymateuse contenant de la pulpe végétale ;
b) soumettre la cellule parenchymateuse contenant de la pulpe végétale à un traitement chimique et/ou enzymatique ayant pour résultat une dégradation partielle et/ou une extraction de la pectine et de l'hémicellulose ;
c) soumettre le matériau résultant de l'étape b) à un traitement de grand cisaillement, dans lequel la taille de particule du matériau cellulosique est réduite.

14. Utilisation selon la revendication 13, dans laquelle l'utilisation implique une température de traitement inférieure à 10 °C.

15. Utilisation selon la revendication 14, dans laquelle l'utilisation implique une température de traitement inférieure à 5 °C.
